# DEMANDE DE BREVET EUROPEEN

(11) **EP 1 431 598 A1**
(43) Date de publication de la demande: **23.06.2004**
(21) Numéro de dépôt: 03028930.0
(22) Date de dépôt: 17.12.2003
(51) Int. Cl.: F16C 11/10, F16J 1/22

(54) **Ensemble a liaison rotulante, maître-cylindre muni d'un tel ensemble, et procédé de montage d'un tel ensemble**

(30) Priorité: 20.12.2002 FR 0216467
(71) Demandeur: ROBERT BOSCH GmbH, 70442 Stuttgart (DE)
(72) Inventeur: Bourlon, Philippe, F-77230 DAMMARTIN EN GOELE (FR)
(74) Mandataire: Hurwic, Aleksander Wiktor

(57) **Abrégé**

La présente invention a principalement pour objet un ensemble à liaison rotulante, notamment pour système de freinage comportant un élément mâle (2) et un élément femelle (4) caractérisé en ce que une première extrémité (14) de élément mâle (2) comporte des moyens (28) extractibles radialement de manière automatique lors du montage de ladite première extrémité (14) de l'élément mâle (2) dans un logement (16) de l'élément femelle (4), lesdits moyens extractibles (28) coopérant avec la surface intérieure dudit logement (16) de manière à réaliser un liaison rotulante entre l'élément mâle (2) et l'élément femelle (4).

La présente invention a également pour objet un maître-cylindre caractérisé en ce que qu l'élément mâle (2) forme une extrémité d'un piston dudit maître-cylindre et l'élément femelle (4) forme la tige d'actionnement dudit maître-cylindre..

La présente invention s'applique notamment à l'industrie automobile.

La présente invention s'applique principalement à l'industrie du freinage pour véhicules automobiles et notamment à l'industrie du freinage pour voitures particulières.

## Description

La présente invention se rapporte principalement à un ensemble à liaison rotulante, à un maître-cylindre muni d'un tel ensemble, et à un procédé de montage d'un tel ensemble.

Dans le domaine du freinage pour véhicule automobile, en particulier le domaine de freinage électrohydraulique, il est nécessaire de lier sans jeu et de manière très sûre une tige d'actionnement reliée à une pédale de frein déplacée par le conducteur automobile à un émetteur de pression, par exemple un maître-cylindre raccordé à des freins disposés au niveau des roues du véhicule automobile.

Il est connu de réaliser cette liaison par encliquetage d'une seconde extrémité de la tige d'actionnement opposée à la première extrémité reliée à la pédale de frein dans une partie femelle formée par un alésage borgne pratiquée dans un piston primaire du maître-cylindre, l'encliquetage étant réalisé par un bague élastique de manière radiale et de diamètre au repos inférieur au diamètre extérieur de la seconde extrémité de la tige de poussée, ladite bague étant montée de manière fixe et sans jeu dans le corps du piston.

Ce dispositif d'encliquetage assure une liaison sûre entre la tige d'actionnement et le piston primaire, de plus il permet un accrochage rapide, simple et automatique de la tige d'actionnement au piston primaire. Cependant il nécessite de monter en premier lieu la bague radialement élastique dans l'alésage du piston primaire ce qui peut s'avérer assez long à réaliser, même par des moyens mécanisés.

C'est par conséquent un but de la présente invention d'offrir un ensemble à liaison rotulante d'une grande sécurité et de réalisation simple et rapide.

C'est également un but de la présente invention d'offrir un ensemble à liaison rotulante s'adaptant facilement aux maîtres-cylindres existants.

Ces buts sont atteints par un ensemble comportant un élément mâle et un élément femelle, l'élément mâle comportant des moyens de verrouillage coopérant avec l'élément femelle et formés par des éléments extractibles de manière radiale lors du montage de l'élément mâle dans l'élément femelle.

En d'autres termes, l'élément femelle est formé par un alésage borgne obturé à une extrémité par un fond, et formant une gâche, ledit élément mâle comportant une clé et au moins un pêne, ledit pêne venant coopérer avec ladite gâche lors du montage, ledit pêne étant déplacé au moyen de la clé par appui de ladite clé contre le fond de la partie femelle.

La présente invention a principalement pour objet un ensemble à liaison rotulante comportant un élément femelle percé d'un alésage d'axe longitudinal, muni à une première extrémité longitudinale d'un fond dans lequel est pratiqué un logement sensiblement sphérique de diamètre intérieur supérieur au diamètre dudit alésage, et à une deuxième extrémité longitudinale une ouverture permettant l'introduction d'un élément mâle, ledit élément mâle étant formé d'une tige munie d'une première extrémité longitudinale sphérique apte à pénétrer dans ledit alésage et de dimension transversale inférieur au diamètre du logement sphérique caractérisé en ce que ladite première extrémité de l'élément mâle comporte des moyens pour lier de manière rotulante l'élément mâle et l'élément femelle et en ce que l'élément mâle et l'élément femelle se verrouillent mutuellement en position d'assemblage.

La présente invention a également pour objet un ensemble à liaison rotulante caractérisé en ce que les moyens sont extractibles automatiquement de manière radiale lors du montage de ladite première extrémité de l'élément mâle dans le logement de l'élément femelle.

La présente invention a également pour objet un ensemble à liaison rotulante caractérisé en ce que lesdits moyens comportent au moins un premier et un deuxième pions,' montés à coulissement dans un alésage diamétral sensiblement orthogonal à l'axe longitudinal et débouchant d'une part et d'une autre part de la première extrémité de l'élément mâle, un élément d'entretoisement monté à coulissement dans un alésage axial interceptant l'alésage diamétral à une première extrémité et débouchant vers l'extérieur de l'élément mâle à une deuxième extrémité, et en ce qu'avant l'assemblage de l'élément mâle et de l'élément femelle, les pions,' sont dans une position d'écartement minimum de l'axe longitudinal, appelée position rentrée et après l'assemblage de l'élément mâle et de l'élément femelle, l'élément d'entretoisement écarte lesdits pions,' dans une position d'écartement maximum, appelée positon sortie.

La présente invention a également pour objet un ensemble à liaison rotulante ou caractérisé en ce que l'élément d'entretoisement est interposé entre les premières extrémités des premier et deuxième pions, en ce que la périphérie de l'élément d'entretoisement est conformée en rampe selon l'axe longitudinale, la rampe étant croissante en direction de la première extrémité de l'élément d'entretoisement et en ce qu'une première extrémité de l'élément d'entretoisement vient en saillie avant l'assemblage de la surface extérieure de la première extrémité sphérique de manière à ce que ledit élément d'entretoisement soit déplacé de manière axiale par appui de ladite première extrémité longitudinale de l'élément d'entretoisement contre la surface intérieure du logement lors de l'introduction de l'élément mâle dans l'élément femelle.

La présente invention a également pour objet un ensemble à liaison rotulante caractérisé en ce que la rampe comporte au moins une première portion cylindrique de plus petit diamètre et une deuxième portion cylindrique de plus grand diamètre, ladite première portion de plus petit diamètre étant disposées entre les premières extrémités des pions avant l'assemblage de l'élément mâle et de l'élément femelle et ladite deuxième portion de plus grand diamètre étant disposée entre les premières extrémités des pions après l'assemblage de l'élément mâle et de l'élément femelle et en ce que un tronc de cône raccorde la première portion à la seconde portion.

La présente invention a également pour objet un ensemble à liaison rotulante caractérisé en ce que l'élément d'entretoisement a une forme sensiblement conique.

La présente invention a également pour objet un ensemble à liaison rotulante caractérisé en ce que la première extrémité des pions est sensiblement plane et une seconde extrémité des pions est formée par une calotte sphérique de rayon sensiblement égal au rayon intérieur du logement de l'élément femelle.

La présente invention a également pour objet un ensemble à liaison rotulante caractérisé en ce que les pions,' sont maintenus en position d'écartement minimum par des moyens de retenue.

La présente invention a également pour objet un ensemble à liaison rotulante caractérisé en ce que les moyens de retenue sont formés par un anneau élastique monté dans des gorges pratiqués dans l'extrémité sphérique des pions et dans une gorge annulaire reliant les extrémités de l'alésage diamétral.

La présente invention a également pour objet un ensemble à liaison rotulante caractérisé en ce qu'il comporte également des moyens de déverrouillage dudit ensemble, lesdits moyens de déverrouillage étant formé par un passage permettant à un outil de déplacer simultanément de manière axiale l'élément d'entretoisement vers le fond du logement et l'élément mâle vers la deuxième extrémité de l'alésage longitudinal de l'élément femelle de manière à ce que les pions reprennent leur position rentrée.

La présente invention a également pour objet un ensemble à liaison rotulante caractérisé en ce que ledit passage est pratiqué de manière axiale dans l'élément mâle en prolongement de l'alésage recevant l'élément d'entretoisement.

La présente invention a également pour objet un ensemble à liaison rotulante caractérisé en ce que ledit passage est pratiqué dans le fond du logement sphérique de l'élément femelle en regard de la première extrémité longitudinale de l'élément d'entretoisement.

La présente invention a également pour objet un maître-cylindre pour système de freinage comportant un corps percé d'un alésage dans lequel est monté à coulissement au moins un piston lié de manière rotulante à une tige d'actionnement reliée à une pédale de frein, ledit piston délimitant une chambre d'alimentation raccordée à un réservoir de liquide de frein et une chambre de pression raccordée à des freins F disposés au niveau de roue R, lesdites chambres de pression et d'alimentation, étant en communication au repos et isolées l'une de l'autre lors d'une action de freinage caractérisé en ce qu'il comporte un ensemble à liaison rotulante selon la présente invention, l'élément mâle formant une extrémité du piston et l'élément femelle formant la tige d'actionnement.

La présente invention a également pour objet un maître-cylindre caractérisé en ce que la chambre de pression est raccordée en fonctionnement normal à une cartouche de simulation de la sensation pédale et en fonctionnement dégradé aux freins.

La présente invention a également pour objet un procédé de montage d'un ensemble à liaison rotulante selon la présente invention caractérisé en ce que
- on monte les pions dans l'alésage diamétrale de l'élément mâle et l'élément d'entretoisement dans l'alésage longitudinal de l'élément mâle de manière à ce que les pions soient dans leur position d'écartement minimum ;
- on introduit l'élément mâle dans l'élément femelle jusqu'à ce que la première extrémité de l'élément mâle viennent en contact avec la paroi du logement de l'élément femelle de manière à ce que l'élément d'entretoisement soit repoussé à l'intérieur de l'alésage longitudinal de l'élément mâle et amène les pions dans leur position d'écartement maximum et les extrémités sphériques desdits pions coopérant alors avec la surface intérieur du logement de l'élément femelle .

La présente invention sera mieux comprise à l'aide de la description qui va suivre et des dessins annexés pour lesquels l'avant et l'arrière correspondent respectivement à la gauche et la droite des figures et sur lesquels :
- La figure 1 est une vue en coupe longitudinale d'un premier exemple de réalisation d'un ensemble à liaison rotulante selon la présente invention dans une première position ;
- La figure 2 est une vue en coupe longitudinale de la figure 1 dans une deuxième position ;
- La figure 3 est une vue de dessus d'un détail d'un deuxième exemple de réalisation d'un ensemble selon la présente invention ;

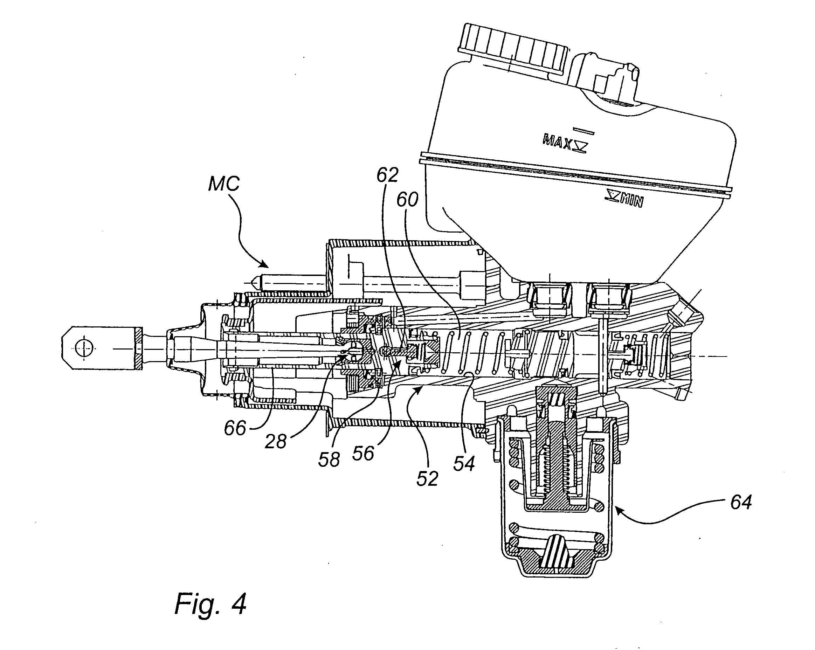

- La figure 4 est une vue en coupe longitudinale d'un maître-cylindre selon la présente invention.

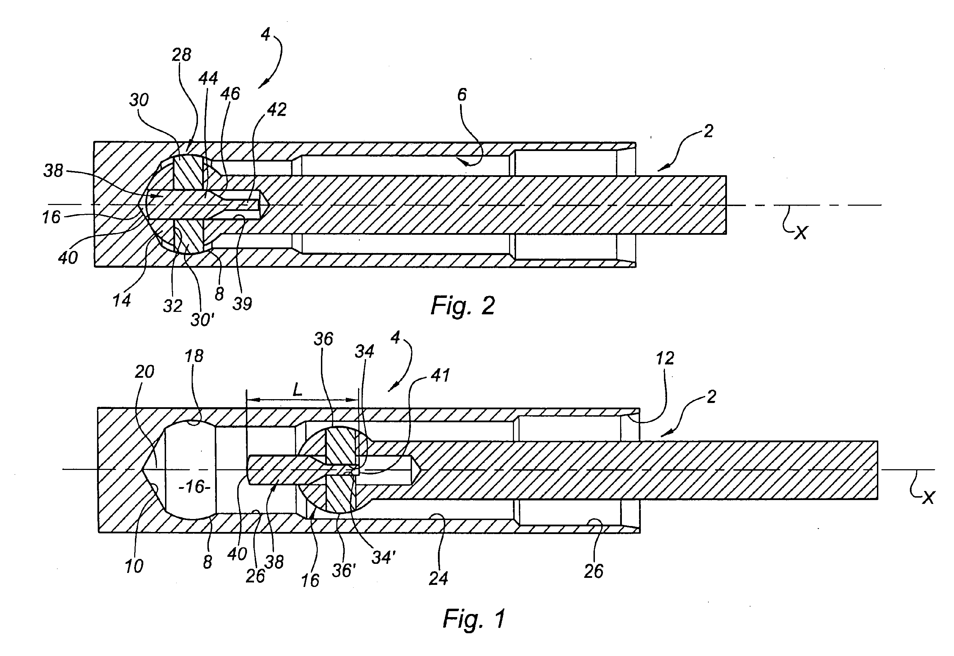

Sur les figures 1 et 2, on peut voir un ensemble à liaison rotulante selon la présente invention comportant un élément mâle 2 et un élément femelle 4, l'élément mâle 2 étant par exemple formé par une première extrémité longitudinale d'une tige d'actionnement d'un dispositif de freinage, opposée à une deuxième extrémité reliée à une pédale de frein et l'élément femelle 4 étant par exemple formé par une queue d'un piston primaire d'un maître-cylindre.

L'élément femelle 4 comporte un alésage 6 sensiblement cylindrique d'axe longitudinal X débouchant à une première extrémité longitudinale 8 dans un logement sensiblement sphérique 16 de diamètre supérieur au diamètre de l'alésage 6, et ouvert à une deuxième extrémité longitudinale 12 opposée à la première extrémité 8 permettant la mise en place d'une première extrémité longitudinale 14 de l'élément mâle 2. Le logement 16 est délimité par un fond 10. Le diamètre intérieur de l'alésage 6 est supérieur aux dimensions transversales de la première extrémité 14 de l'élément mâle avant l'assemblage.

Dans l'exemple représenté, la première extrémité 14 de l'élément mâle est de forme sphérique.

Dans l'exemple représenté, le logement 16 comporte un première partie 18 sensiblement torique coaxiale à l'axe de l'alésage 6 et une deuxième partie 20 conique pratiquée dans le fond 10 de l'alésage coaxiale à l'axe X.

De manière avantageuse, le diamètre intérieur de l'alésage se rétrécit de la deuxième extrémité 8 de l'alésage au logement 16 de manière à former un entonnoir assurant le guidage pour la pièce mâle 2. Dans l'exemple représenté, l'alésage 6 comporte une première 22, une deuxième 24 et une troisième 26 portions cylindriques, le diamètre de la première portion 22 étant inférieur au diamètre de la deuxième portion 24, et le diamètre de la troisième portion 24 étant inférieur au diamètre de la deuxième portion 26 et au diamètre du logement 16.

L'élément mâle comporte également des moyens 28 de liaison de manière rotulante de l'élément mâle à l'élément femelle portées par la première extrémité longitudinale 14 de l'élément mâle.

Les moyens de liaison 28 comportent au moins un premier et un deuxième pions 30,30' montés à coulissement dans un alésage 32 pratiqué dans l'extrémité 14 le long d'un diamètre de ladite extrémité 14 dans une direction sensiblement orthogonale à l'axe X, l'alésage 32 débouchant d'une part et d'autre part de l'extrémité 14. Les pions 30,30' comportent respectivement des premières extrémités 34,34' radialement internes et des deuxièmes extrémités radialement externes 36,36' opposées respectivement aux premières extrémités. Les pions 30,30' sont disposés dans l'alésage 32 de façon à ce que les premières extrémités 34, 34' soient montées en vis-à-vis.

Les deuxièmes extrémités 36,36' sont avantageusement formées par une calotte sphérique, ladite calotte sphérique 36,36' étant de rayon sensiblement égal au rayon intérieur de la partie torique 18 de manière à permettre un contact sensiblement surfacique entre la calotte et le tore.

Dans l'exemple représenté, les premières extrémités 34,34' sont formées par des surfaces planes.

Il est bien entendu que les moyens de liaison 28 peuvent comporter plus d'une paire de pions, par exemple deux ou trois paires.

Avant l'assemblage de l'élément mâle 2 et de l'élément femelle 4, les premières extrémités 34,34' des pions 30,30' sont en position d'écartement minimum, appelée position rentrée, les calottes sphériques 36,36' ne sont alors pas en saillie de la surface de la première extrémité sphérique 14 de l'élément mâle.

Après l'assemblage de l'élément mâle 2 et de l'élément femelle 4, les premières extrémités 34,34' sont en position d'écartement maximum, appelée position sortie, les calottes sphériques 36,36' étant alors en saillie de la surface extérieure de la première extrémité 14 de l'élément mâle. Le diamètre du logement 16 étant supérieur au diamètre de la portion d'alésage 26, lorsque les pions 30,30' sont en position sortie, l'élément mâle est retenu dans le logement 16.

Les moyens 28 comportent également un élément d'entretoisement 38 disposé entre les premières extrémités planes 34,34' assurant avant l'assemblage de l'élément mâle et de l'élément femelle la position d'écartement minimum entre les pions, et assurant après montage la position d'écartement maximum entres les pions 30,30'.

L'élément d'entretoisement 38 a sensiblement la forme d'une navette montée à coulissement dans un alésage 39 d'axe X pratiqué dans l'extrémité sphérique de l'élément mâle et débouchant à une première extrémité longitudinale dans le logement 16 de l'élément femelle et à une deuxième extrémité longitudinale dans l'alésage diamétral 32.

La navette a une dimension axiale L suffisante pour que simultanément une première extrémité 40 axiale de la navette fasse saillie de la première extrémité axiale 14 de l'élément mâle et qu'une deuxième extrémité axiale 41 de la navette s'interpose entre les pions 30 et 30' selon l'axe X.

L'alésage axial 39 est également dimensionné pour permettre à la première extrémité 40 de la navette de pénétrer dans l'alésage 39 afin que celui-ci ne soit plus en saillie de la surface de l'extrémité 14 de l'élément mâle.

La périphérie de la navette 38 est formée par une rampe ascendante en direction de la première extrémité longitudinale 40 de l'élément d'entretoisement 38, ladite rampe comporte dans l'exemple représenté une première partie arrière 42 de plus petit diamètre assurant l'écartement minimum et une deuxième partie 44 avant de plus grand diamètre assurant l'écartement maximum. La première partie 42 étant raccordée à la deuxième partie par une rampe, avantageusement formée par un tronc de cône 46.

Il est bien entendu envisageable de réaliser la navette avec une rampe ascendante de manière continue, par exemple en forme de cône.

On peut également prévoir que la navette 38 comporte uniquement une partie conique et une partie assurant l'écartement maximum des pions. Ainsi la navette ne s'interposerait entre les surfaces planes qu'au moment du montage.

Si on considère une vue en coupe longitudinale d'un pion, le côté latérale d'un pion et le côté plan des extrémités 34,34' se raccordent par un arc de cercle de manière à faciliter le coulissement entre les pions et la navette et à réduire les risques d'usure.

Les dimensions axiales des différentes parties 42,44,46 de la navette et des pions 30,30' sont déterminées de manière à ce que le contact entre les calottes sphériques et la surface intérieure de la partie torique ait lieu lorsque l'extrémité sphérique vient en butée contre la paroi du logement 16 de l'élément femelle.

Nous allons maintenant décrire les différentes phases d'assemblage de l'élément mâle dans l'élément femelle.

Le procédé de fabrication de l'ensemble selon la présente invention comporte principalement les étapes suivantes :
- la mise en place de la navette 38 dans l'alésage 39 et des pions 30,30' dans l'alésage 32, la première partie de plus petit diamètre 42 de la navette étant disposée entre les premières extrémités 34,34' des pions 30,30'.
- l'introduction de l'extrémité sphérique de l'élément mâle dans l'élément femelle selon l'axe X jusqu'à ce que la première extrémité 40 de la navette vienne en contact avec la paroi du logement 16, puis jusqu'à ce que des pions s'écartent simultanément l'un de l'autre et que leurs extrémités radialement externes en forme de calotte sphérique 36,36' viennent en contact avec la paroi du logement 16. La liaison entre l'élément mâle et l'élément femelle est alors définitive, et l'élément mâle peut alors pivoter dans l'élément femelle par glissement des extrémités sphériques 36,36 des pions' 30,30' sur la paroi du logement 16.

L'ensemble selon la présente invention assure un haut niveau de sécurité du fait d'un verrouillage mutuelle entre l'élément mâle te l'élément femelle. En effet les pions applique un effort de serrage sur la navette qui sont eux maintenus en appui contre la paroi du logement 14 par la portion de plus grand diamètre de la navette, qui est maintenu immobile axialement par le fond 10 du logement 16 pratiqué dans l'élément femelle.

Il est également envisageable de dimensionner l'alésage axial 39 pour éviter un déplacement axial de la navette après l'assemblage.

L'ensemble se verrouille de manière automatique et ne nécessite pas de pièce supplémentaire à introduire dans l'élément femelle, quant à la mise en place des pions et de la navette, celle-ci est très simple.

On peut prévoir des moyens de déverrouillage de l'ensemble élément mâle 2 et élément femelle 4 comportant un passage axial (non représenté) dans l'élément mâle 2 raccordant l'alésage et l'extérieur permettant un déverrouillage de la liaison entre l'élément mâle et l'élément femelle à l'aide d'un outil venant simultanément repousser vers l'avant la navette et déplacer vers l'arrière l'élément mâle afin de permettre aux pions de retrouver une position d'écartement minimum.

On peut de la même manière prévoir une ouverture dans le fond du logement 16 en regard de la navette.

Il est également avantageux de prévoir des moyens de retenue de la navette et des pions en position rentrée afin d'éviter que ceux-ci ne sortent de manière intempestive de leur logement, par exemple en disposant une couche de graisse entre la surface latérale des pions et la surface de l'alésage radial. On peut également fabriquer la navette et les pions en un matériau faiblement magnétique assurant le maintien des pions et de la navette 38.

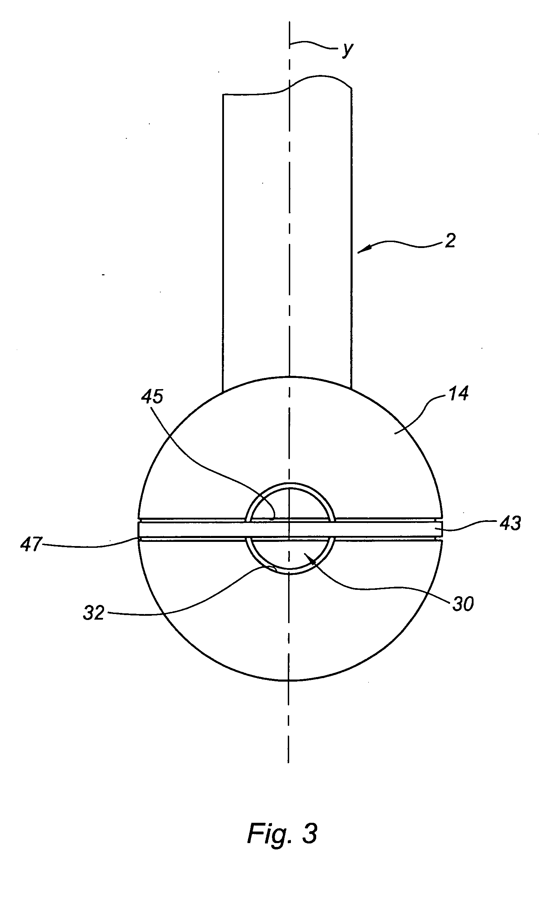

Sur la figure 3, le moyen 28 comporte deux pions répartis angulairement de manière régulière. Les pions sont maintenus avant montage à l'intérieur des alésages au moyen d'un anneau élastique 43 coaxial à l'axe Y de l'élément mâle et monté dans des gorges 45 pratiquées dans les calottes sphériques 36,36' des pions dans un plan orthogonal P à l'axe Y de l'élément mâle et dans une gorge annulaire 47 raccordant le deux extrémités de l'alésage 32 et également contenu dans le plan P. Ainsi l'anneau élastique 43 applique un effort radial vers l'intérieur sur les pions 30,30' qui sont maintenues en position d'écartement minimum sans gêner les pions 30,30' pour venir en position d'écartement maximum lors du montage.

On a bien réalisé un ensemble à liaison rotulante à haut niveau de sécurité, de réalisation simple et rapide.

Cet ensemble peut s'appliquer à tout dispositif nécessitant une liaison rotulante sans jeu, par exemple un maître-cylindre pour circuit de freinage hydraulique, un servomoteur d'assistance pneumatique au freinage ou encore à des amortisseurs de hayons.

La présente invention s'applique particulièrement à un maître-cylindre MC pour système de freinage électrohydraulique (figure 5) formé d'un corps 52 percé d'un alésage 54 dans lequel est monté à coulissement étanche au moins un piston 56, avantageusement un premier et un deuxième pistons 56 délimitant respectivement un circuit primaire et un circuit secondaire reliés à des freins F disposés au niveau de roues R. Le piston primaire est actionné par une tige de commande reliée à une pédale de frein 55. Chacun des circuits comporte une chambre d'alimentation 58 raccordée à un réservoir de liquide de frein (non représenté) et une chambre 60 de pression reliés aux freins, la chambre d'alimentation et la chambre de pression étant mises en communication au repos par un passage 62 pratiqué dans le piston et isolées par un obturateur 64 monté dans la passage 62.

Le piston primaire 56 comporte un queue de piston 66 percé d'un alésage borgne et formant l'élément femelle de l'ensemble à liaison rotulante selon la présente invention et l'élément mâle est formé par la tige d'actionnement reliée à une pédale de frein.

Les chambres de pression 58 des circuits primaire et secondaire sont lors d'un freinage en fonctionnement normal isolés des freins par des électrovannes (non représentées) et la chambre de pression du circuit primaire est en communication avec une cartouche 64 de simulation de la sensation pédale.

La cartouche 64 est connue par l'homme du métier, par conséquent nous ne la décrirons pas d'avantage.
Au repos et en situation de défaillance, les électrovannes sont ouvertes.

La présente invention s'applique notamment à l'industrie automobile.

La présente invention s'applique principalement à l'industrie du freinage pour véhicules automobiles et notamment à l'industrie du freinage pour voitures particulières.

## Revendications

1. Ensemble à liaison rotulante comportant un élément femelle (4) percé d'un alésage (6) d'axe longitudinal (X), muni à une première extrémité longitudinale (8) d'un fond dans lequel est pratiqué un logement (16) sensiblement sphérique de diamètre intérieur supérieur au diamètre dudit alésage (6), et à une deuxième extrémité longitudinale (12) une ouverture permettant l'introduction d'un élément mâle (2), ledit élément mâle (2) étant formé d'une tige munie d'une première extrémité longitudinale sphérique (14) apte à pénétrer dans ledit alésage (6) et de dimension transversale inférieure au diamètre du logement sphérique (16) **caractérisé en ce que** ladite première extrémité (14) de l'élément mâle (2) comporte des moyens (28) réalisant une liaison rotulante entre l'élément mâle (2) et l'élément femelle (4) et **en ce que** l'élément mâle (2) et l'élément femelle (4) se verrouillent mutuellement en position d'assemblage.

2. Ensemble à liaison rotulante selon la revendication 1 **caractérisé en ce que** les moyens (28) sont extractibles automatiquement de manière radiale lors du montage de ladite première extrémité (14) de l'élément mâle (2) dans le logement (16) de l'élément femelle (4).

3. Ensemble à liaison rotulante selon la revendication 2 **caractérisé en ce que** lesdits moyens (28) comportent au moins un premier et un deuxième pions (30,30') montés à coulissement dans un alésage (32) diamétral sensiblement orthogonal à l'axe longitudinal (X) et débouchant d'une part et d'une autre part de la première extrémité (14) de l'élément mâle, un élément d'entretoisement (38) monté à coulissement dans un alésage axial (39) interceptant l'alésage diamétral (32) à une première extrémité et débouchant vers l'extérieur de l'élément mâle à une deuxième extrémité, et **en ce qu'**avant l'assemblage de l'élément mâle (2) et de l'élément femelle (4), les pions (30,30') sont dans une position d'écartement minimum de l'axe longitudinal (X), appelée position rentrée et après l'assemblage de l'élément mâle (2) et de l'élément femelle (4), l'élément d'entretoisement (38) écartent lesdits pions (30,30') dans une position d'écartement maximum, appelée positon sortie.

4. Ensemble à liaison rotulante selon la revendication 3 **caractérisé en ce que** l'élément d'entretoisement est interposé entre les premières extrémités (34,34') des premier et deuxième pions (30,30'), **en ce que** la périphérie de l'élément d'entretoisement est conformée en rampe selon l'axe longitudinale (X), la rampe étant croissante en direction de la première extrémité (40) de l'élément d'entretoisement et **en ce qu'**une première extrémité (40) de l'élément d'entretoisement (38) vient en saillie avant l'assemblage de la surface extérieure de la première extrémité sphérique (14) de manière à ce que ledit élément d'entretoisement soit déplacé de manière axiale par appui de ladite première extrémité longitudinale (40) de l'élément d'entretoisement (38) contre la surface intérieure du logement (40) lors de l'introduction de l'élément mâle (2) dans l'élément femelle (4).

5. Ensemble à liaison rotulante selon la revendication 4 **caractérisé en ce que** la rampe comporte au moins une première portion cylindrique de plus petit diamètre (42) et une deuxième portion cylindrique de plus grand diamètre (44), ladite première portion de plus petit diamètre (42) étant disposées entre les premières extrémités (34,34') des pions avant l'assemblage de l'élément mâle (2) et de l'élément femelle (4) et ladite deuxième portion de plus grand diamètre (44) étant disposée entre les premières extrémités des pions après l'assemblage de l'élément mâle (2) et de l'élément femelle (4) et **en ce que** un tronc de cône raccorde la première portion (42) à la seconde portion (44).

6. Ensemble à liaison rotulante selon la revendication 4 **caractérisé en ce que** l'élément d'entretoisement (38) a une forme sensiblement conique.

7. Ensemble à liaison rotulante selon l'une quelconque des revendications de 3 à 6 **caractérisé en ce que** la première extrémité (34,34') des pions (30,30') est sensiblement plane et une seconde extrémité (36,36') des pions (30,30') est formée par une calotte sphérique de rayon sensiblement égal au rayon intérieur du logement (16) de l'élément femelle (4).

8. Ensemble à liaison rotulante selon l'une quelconque des revendications 3 à 7 **caractérisé en ce que** les pions (30,30') sont maintenus en position d'écartement minimum par des moyens de retenue.

9. Ensemble à liaison rotulante selon la revendication précédente **caractérisé en ce que** les moyens de retenue sont formés par un anneau élastique (43) monté dans des gorges (45) pratiqués dans l'extrémité sphérique (36,36') des pions (30,30') et dans une gorge annulaire (47) reliant les extrémités de l'alésage diamètral.

10. Ensemble à liaison rotulante selon l'une quelconque des revendications 3 à 10 **caractérisé en ce qu'**il comporte également des moyens de déverrouillage dudit ensemble, lesdits moyens de déverrouillage étant formé par un passage permettant à un outil de déplacer simultanément de manière axiale l'élément d'entretoisement (38) vers le fond (10) du logement (16) et l'élément mâle vers la deuxième extrémité (12) de l'alésage (8) longitudinal de l'élément femelle (4) de manière à ce que les pions (30,30') reprennent leur position rentrée.

11. Ensemble à liaison rotulante selon la revendication précédente **caractérisé en ce que** ledit passage est pratiqué de manière axiale dans l'élément mâle en prolongement de l'alésage (39) recevant l'élément d'entretoisement (38).

12. Ensemble à liaison rotulante selon la revendication 10 **caractérisé en ce que** ledit passage est pratiqué dans le fond (10) du logement sphérique (16) de l'élément femelle en regard de la première extrémité longitudinale (40) de l'élément d'entretoisement (38).

13. Maître-cylindre pour système de freinage comportant un corps (52) percé d'un alésage (54) dans lequel est monté à coulissement au moins un piston (56) lié de manière rotulante à une tige d'actionnement reliée à une pédale de frein, ledit piston (56) délimitant une chambre d'alimentation (58) raccordée à un réservoir de liquide de frein et une chambre de pression (60) raccordée à des freins disposés au niveau de roue, lesdites chambres de pression et d'alimentation (58,60) étant en communication au repos et isolées l'une de l'autre lors d'une action de freinage **caractérisé en ce qu'**il comporte un ensemble à liaison rotulante selon l'une quelconque des revendications précédentes, l'élément mâle (2) formant une extrémité du piston (56) et l'élément femelle (4) formant la tige d'actionnement.

14. Maître-cylindre selon la revendication précédente **caractérisé en ce que** la chambre de pression (60) est raccordée en fonctionnement normal à une cartouche (64) de simulation de la sensation pédale et en fonctionnement dégradé aux freins.

15. Procédé de montage d'un ensemble à liaison rotulante selon l'une quelconque des revendications de 1 à 12 **caractérisé en ce que**
- on monte les pions (30,30') dans l'alésage diamétrale (32) de l'élément mâle (2) et l'élément d'entretoisement (38) dans l'alésage longitudinal (39) de l'élément mâle (2) de manière à ce que les pions (30,30') soient dans leur position d'écartement minimum ;
- on introduit l'élément mâle (2) dans l'élément femelle (4) jusqu'à ce que la première extrémité (14) de l'élément mâle (2) viennent en contact avec la paroi du logement (16) de l'élément femelle (4) de manière à ce que l'élément d'entretoisement (38) soit repoussé à l'intérieur de l'alésage longitudinal (39) de l'élément mâle (2) et amène les pions (30,30') dans leur position d'écartement maximum et les extrémités sphériques (36,306') desdits pions (30,30') coopérant alors avec la surface intérieur du logement (16) de l'élément femelle (4).
